# EUROPEAN PATENT APPLICATION

(11) **EP 2 605 421 A1**
(43) Date of publication of application: **19.06.2013**
(21) Application number: 11816118.1
(22) Date of filing: 12.08.2011
(51) Int. Cl.: H04B 7/15

(54) **METHOD, SYSTEM AND WIRELESS COMMUNICATION DEVICE FOR AUXILIARY TRANSMISSION TO ADJACENT CHANNELS**

(30) Priority: 13.08.2010 CN 201010255888
(71) Applicant: ZTE Corporation, Shenzhen, Guangdong 518057 (CN)
(72) Inventor: DIAO, Xinxi, Shenzhen Guangdong 518057 (CN); LAI, Zhengrong, Shenzhen Guangdong 518057 (CN); ZHU, Xiaodong, Shenzhen Guangdong 518057 (CN); ZHANG, Senlin, Shenzhen Guangdong 518057 (CN); MA, Zhifeng, Shenzhen Guangdong 518057 (CN); YANG, Guang, Shenzhen Guangdong 518057 (CN); ZHANG, Li, Shenzhen Guangdong 518057 (CN); YUE, Tianheng, Shenzhen Guangdong 518057 (CN)
(74) Representative: Delorme, Nicolas
(86) International application number: PCT/CN2011/078367
(87) International publication number: WO 2012/019560

(57) **Abstract**

The present invention discloses a method, system and wireless communication device for performing auxiliary signal transmission for an adjacent channel. The method comprises: selecting from adjacent channels of a transmission channel of the wireless communication device an adjacent channel requiring and allowing auxiliary signal transmission of an existing signal on the adjacent channel; determining an auxiliary signal generating mode for the existing signal on the selected adjacent channel; generating an auxiliary signal locally at a place where the wireless communication device is located according to the determined auxiliary signal generating mode, and transmitting an auxiliary signal on a corresponding adjacent channel. According to the solution provided by the present invention, through the auxiliary signal transmission for the adjacent channel of the transmission channel of the wireless communication device, namely increasing the power of a wireless signal on the adjacent channel of the working channel, the interference to the adjacent channel from the transmission channel of the wireless communication device is suppressed, the guard bandwidth between the transmission channel of the wireless communication device and the adjacent channel is reduced, the usage efficiency of the frequency spectrum is increased, and the coverage performance of the adjacent channel of the transmission channel of the wireless communication device is improved.

## Description

### Technical Field

The present invention relates to a cognitive radio technology, in particular to a method, a wireless communication device and a system for performing auxiliary signal transmission for an adjacent channel of a transmission channel of a wireless communication device.

### Background

It is a method for efficiently using the frequency spectrum to recognize an existing idle frequency band within a predetermined frequency band range, and establish a communication channel within the recognized idle frequency band. The method for using the frequency spectrum is a development direction of a wireless communication system in future, and is also an important field of the research of the cognitive radio technology.

The cognitive radio technology which flexibly uses the frequency spectrum has been widely researched internationally. For example, staged research of a research project (E3, i.e. End-to-End Efficiency) of the European Union has been completed under the seventh research frame, and a research report has been output. From the perspective of standardization, the International Telecommunication Union (ITU) and the European Telecommunications Standards Institute (ETSI) are also conducting the standardization research on the cognitive radio, for example, the standardization discussion of the cognitive radio and software radio. From the perspective specified by the radio regulations, the ITU is discussing how to support the cognitive radio in WRC12 wireless frequency spectrum planning, and the research in the field is being conducted, for example, the discussion of the frequency spectrum regulations that the cognitive radio relates to. The utilization of an idle frequency band in a digital television broadcasting frequency range is also a focus of research at present, gets attention from the government and research institution in America and Europe, and gives a comprehensive summarization of related problems.

Although the above research contents do some comprehensive researches on the cognitive radio from the perspective of conception, system architecture, resource management and evolution of the frequency spectrum regulations, but they are mainly analysis on a higher level, and presented results cannot be directly used for solving technical problems or for system implementation.

Telecom operators focus on how to apply the cognitive radio technology to a commercial network and creatively solve a problem which is hard to be solved or cannot be solved by an existing technology. Utilizing an available idle frequency band to dynamically deploy a communication channel or deploying different communication systems in the same geographical area in a way of adjacent channels needs to solve a common technical problem, namely suppressing adjacent-channel interference among systems.

In order to suppress the adjacent-channel interference under a precondition of ensuring efficient utilization of the frequency spectrum, the wireless communication system is required to automatically recognize the idle frequency band and adaptively configure channel operating parameters, such as guard bandwidth, transmission power and the like, and implementation of these capabilities needs to detect and estimate power frequency spectrum distribution within a specific frequency band and performance of a radio frequency device within the specific frequency band. Problems of recognition of the available idle frequency band, boot of channel configuration parameters within the available idle frequency band and integrated management of the frequency spectrum are needed to be solved. At present, the relevant existing technologies are as follows.

In an application, the application number of which is CN200610011235 and the title of which is *System and method for gathering information of frequency range,* the provided system for gathering the information of the frequency range can comprise several frequency range measuring devices, several devices for gathering and managing the information of the frequency range, several wireless communication base stations (or access points), several base station controllers, and several terminals. The method for gathering the information of the frequency range in the application comprises that: the devices for gathering and managing the information of the frequency range gather prior information of the frequency range from different networks, start the measurement of the information of the frequency range, gather measurement information of the frequency range, and finally analyze overall information of the frequency range.

An application, the application number of which is CN200610152441.9 and the title of which is *Method and apparatus for using frequency spectrum,* provides a specific method for using the frequency spectrum. The method comprises the following steps: selecting some frequency bands from a licensed frequency range for communications of a wireless duplex communication system as support frequency bands, and dynamically selecting some idle frequency bands from other frequency ranges as dynamic borrowed frequency bands, wherein the dynamic borrowed frequency bands support a Time Division Duplex (TDD) mode, and can be used for uplink transmission as well as downlink transmission; the support frequency bands and the dynamic borrowed frequency bands together constructing the frequency spectrum needed by the wireless duplex communication system in a frequency division mode or a half frequency division mode.

In the application, an apparatus for using the frequency spectrum comprises: a support frequency band setting module, which is configured to select some frequency bands from a licensed frequency range for communications of the wireless duplex communication system as support frequency bands; a dynamic frequency band setting module, which is configured to dynamically select some idle frequency bands from other frequency ranges as dynamic borrowed frequency bands; and a downlink frequency spectrum constructing module, which is configured to make the support frequency bands and the dynamic borrowed frequency bands together construct a downlink frequency spectrum needed by the wireless duplex communication system.

In the application, a method for measuring the frequency spectrum comprises that: each base station uses its own configured frequency spectrum measuring unit to independently measure an electromagnetic frequency spectrum of a location where the base station is, and reports a measurement result to a channel adjusting unit. The frequency spectrum range of the frequency spectrum measuring unit is controlled according to information of the range of a candidate frequency range, wherein the information is sent from a Dynamic Band Borrowing (DBB) arbitration centre. The frequency spectrum measuring unit can adopt either an omnidirectional measurement mode or an orientation measurement mode.

In the application, determining a working dynamic borrowed frequency band comprises: carrying out AND operation to idle frequency bandwidth which is measured by one of multiple base stations, idle frequency bandwidth which is measured by a base station adjacent to the above base station, and idle frequency bandwidth which is measured by a mobile device in an coverage area of the base station; regarding an AND value obtained by the AND operation as the range of a working dynamic borrowed frequency band and a spare dynamic borrowed frequency band of a base station.

An application, the application number of which is US20080075059A1 and the title of which is *Method and apparatus for reducing the guard band between wireless communication systems operating in the same geographical area,* provides a method which comprises the following steps: reducing the guard band between a first wireless communication system and a second wireless communication system operating in the same geographical area; a first wireless access point in the first wireless communication system sending a beacon signal; a second wireless access point in the second wireless communication system scanning in a frequency range of the second wireless communication system; checking interference to the second wireless access point from the first wireless access point; if the interference from the first wireless access point does not exceed an acceptable threshold, running the second wireless access point. Furthermore, the method comprises: sending the beacon signal within a specified frequency band, and scanning within a second frequency range adjacent to the specified frequency band. According to the calculation result, the wireless communication system makes adjustments as follows: (a) if the interference is lower than the acceptable threshold, the wireless communication system operates normally; (b) if the interference exceeds the acceptable threshold, the wireless communication system adjusts transmission power, and the interference is made to be below the acceptable threshold through an antenna pattern; (c) or, both the wireless communication systems reduce the transmission power.

In the relevant existing technologies, the methods provided by the application, the application number of which is CN200610011235 and the title of which is *System and method for gathering information of frequency range,* and the application, the application number of which is CN200610152441.9 and the title of which is *Method and apparatus for using frequency spectrum* have the following disadvantage: a specific implementing method for suppressing the adjacent-channel interference among different wireless communication systems operating within adjacent frequency bands/channels is not provided.

In the method for avoiding the adjacent-channel interference between two systems that is provided by the application, the application number of which is US20080075059A1 and the title of which is *Method and apparatus for reducing the guard band between wireless communication systems operating in the same geographical area,* wireless nodes of the first wireless communication system and the second wireless communication system are required to send the beacon signal. The method is not suitable for solving the problem of the adjacent-channel interference among the existing systems not having a beacon sending capability and the problem of the adjacent-channel interference when an existing wireless communication system not having a beacon sending capability and a wireless communication system having the beacon sending capability are in the same geographical area.

### Summary

In view of the above, the present invention mainly provides a method, a system and a wireless communication device for performing auxiliary signal transmission for an adjacent channel of a transmission channel of a wireless communication device, which can suppress interference to an adjacent channel from a working channel and reduce a guard band between two adjacent frequency bands.

The technical solutions of the present invention are implemented as follows.

A method for performing auxiliary signal transmission for an adjacent channel is provided, which comprises the following steps: selecting, from adjacent channels of a transmission channel of a wireless communication device, an adjacent channel requiring and allowing auxiliary signal transmission of an existing signal on the adjacent channel; determining an auxiliary signal generating mode for the existing signal on the selected adjacent channel; and generating an auxiliary signal locally at a place where the wireless communication device is located according to the determined auxiliary signal generating mode, and transmitting an auxiliary signal on a corresponding adjacent channel.

Preferably, selecting, from the adjacent channels of the transmission channel of the wireless communication device, the adjacent channel requiring and allowing the auxiliary signal transmission of the existing signal on the adjacent channel comprises: according to a frequency location and bandwidth covered by the transmission channel of the wireless communication device, selecting, within left and right adjacent frequency bands of the transmission channel of the wireless communication device and in a predetermined frequency range, an adjacent channel meeting all the following conditions as an adjacent channel requiring the auxiliary signal transmission of the existing signal on the adjacent channel: an existing signal on the adjacent channel is transmitted by a transmitter out of a geographical location where the wireless communication device is located, on the geographical location where the wireless communication device is located, power/intensity of the existing signal on the adjacent channel exceeds a predetermined first power threshold that can be received normally, and on the geographical location where the wireless communication device is located, the power/intensity of the existing signal on the adjacent channel is lower than a second power threshold that is free from interference from out-of-band leakage power of the transmission channel of the wireless communication device; obtaining the adjacent channel requiring and allowing the auxiliary signal transmission of the existing signal on the adjacent channel, by removing an adjacent channel technically and managerially not allowing to perform the auxiliary signal transmission for an existing signal on the adjacent channel from the selected adjacent channel requiring the auxiliary signal transmission of the existing signal on the adjacent channel.

Preferably, after the adjacent channel requiring and allowing the auxiliary signal transmission of the existing signal on the adjacent channel is selected, the method further comprises: according to a maximum value or a typical value of auxiliary signal transmission power applied to the selected adjacent channel, determining out-of-band leakage power of the auxiliary signal of the selected adjacent channel to an adjacent channel of the selected adjacent channel; when the out-of-band leakage power of the auxiliary signal of the selected adjacent channel generated in the adjacent channel of the selected adjacent channel exceeds a predetermined threshold, performing auxiliary signal transmission for the adjacent channel of the selected adjacent channel.

Preferably, the auxiliary signal generating mode is: generating the auxiliary signal for the selected adjacent channel through a local signal reconstruction mode; or generating the auxiliary signal for the selected adjacent channel through a local radio frequency direct amplifying mode.

Preferably, determining that the auxiliary signal generating mode is the local signal reconstruction mode comprises that: a network side is able to obtain a data stream needed for generating the auxiliary signal and has a channel for transmitting the data stream needed for generating a local auxiliary signal to the wireless communication device, and the wireless communication device has a capability of generating a local auxiliary signal on the selected adjacent channel.

Preferably, determining that the auxiliary signal generating mode is a radio frequency direct amplifying mode comprises that: the wireless communication device has a capability of implementing the radio frequency direct amplifying mode on the selected adjacent channel.

Preferably, transmitting the auxiliary signal comprises: keeping time synchronization, frequency synchronization, symbol synchronization and geographical area synchronization between an auxiliary signal transmitted on the selected adjacent channel and the existing signal on the selected adjacent channel, on a geographical location/geographical space where the wireless communication device is located.

Preferably, the time synchronization is that a radio frame of the auxiliary signal transmitted on the selected adjacent channel is kept synchronous in an initial time with a radio frame of the existing signal on the selected adjacent channel at the geographical location where the wireless communication device is located;
the frequency synchronization is that a carrier frequency of the auxiliary signal transmitted on the selected adjacent channel is consistent with a carrier frequency of the existing signal on the selected adjacent channel;
the symbol synchronization is that an occupied time and frequency location and a modulation and coding scheme of an information symbol, which is transmitted on the selected adjacent channel as the auxiliary signal, are consistent with an occupied time and frequency location and a modulation and coding scheme of the information symbol in the existing signal on the selected adjacent channel;
a covered geographical/spatial area synchronization is that a geographical or spatial area covered by the auxiliary signal transmitted by the wireless communication device on the selected adjacent channel is consistent with or larger than a geographical or spatial area covered by a signal transmitted by the wireless communication device on the transmission channel of the wireless communication device.

Preferably, the auxiliary signal generating mode is a local radio frequency direct amplifying mode, and the method further comprises: the wireless communication device performing radio frequency direct amplification on the selected adjacent channel for the existing signal according to predetermined transmission power; an adjacent-band transmission channel in the wireless communication device sharing a transmission antenna with a transmission channel of a transceiver.

Preferably, the auxiliary signal generating mode is the local signal reconstruction mode, and the method further comprises: performing local reconstruction for the existing signal on the selected adjacent channel.

Preferably, performing the local reconstruction for the existing signal on the selected adjacent channel comprises: transmitting a base band signal, or an intermediate-frequency signal, or a data stream of the existing signal which is on the selected adjacent channel to the wireless communication device through a backhaul; the wireless communication device buffering the base band signal, or the intermediate-frequency signal, or the data stream of the existing signal which is on the selected adjacent channel, and obtaining a pre-transmission signal that has a same time domain structure and frequency domain structure within a base band as the existing signal on the selected adjacent channel, after performing a corresponding process aiming at a specific data form of the data stream, or the base band signal, or the intermediate-frequency signal; synchronously transmitting the auxiliary signal of the existing signal and the existing signal on the selected adjacent channel.

Preferably, synchronously transmitting the auxiliary signal of the existing signal comprises: aligning frame headers of a radio frame of the auxiliary signal transmitted by the wireless communication device and a radio frame where the existing signal is, and transmitting the auxiliary signal of the existing signal.

Preferably, when the wireless communication device transmits the auxiliary signal, the auxiliary signal is transmitted using a same antenna as that used by the transmission channel configured within a working frequency band by the wireless communication device; or, the auxiliary signal is transmitted using the same antenna as that used by the transmission channel configured within the working frequency band by the wireless communication device, but different pre-coding processes are applied to the transmission signal within the working frequency band and the auxiliary signal; or, the auxiliary signal is transmitted using an antenna different from that used by the transmission channel configured within the working frequency band by the wireless communication device, and an omnidirectional antenna in the antenna used for transmitting the auxiliary signal covers an area that is able to be covered by a directional antenna.

Preferably, the method further comprises: sending a beacon signal within a frequency band occupied by the selected adjacent channel; wherein the beacon signal comprises identification information of the wireless communication device.

A wireless communication device comprises a transceiver unit, an adjacent-band auxiliary signal transmission unit, an adjacent-band auxiliary signal transmission control unit, a first antenna unit and an interface unit, wherein
the transceiver unit comprises at least one transmission channel, and is configured to perform transmission of a unidirectional downlink signal within a working frequency band, and/or perform bidirectional communication within the working frequency band;
the adjacent-band auxiliary signal transmission unit is configured to transmit an auxiliary signal on an adjacent channel selected from adjacent channels of the transceiver unit;
the adjacent-band auxiliary signal transmission control unit is configured to control a transmission channel parameter and a transmission mode of the adjacent-band auxiliary signal transmission unit;
the interface unit is a module configured to implement digital communication with other communication devices;
the first antenna unit is configured to transmit and receive a signal passing the wireless communication device.

Preferably, the adjacent-band auxiliary signal transmission unit comprises an adjacent-band transmission channel module and an adjacent-band reception channel module, wherein
the adjacent-band transmission channel module is configured to transmit a signal of an adjacent frequency band by adopting an independent physical channel, or by sharing the transmission channel with the transceiver unit;
the adjacent-band reception channel module is configured to receive a signal of the adjacent frequency band by adopting an independent physical channel, or by sharing the reception channel with a unit for detecting wireless environment.

Preferably, the adjacent-band auxiliary signal transmission unit comprises an adjacent-band transmission channel module and an adjacent-band data processing module, wherein
the adjacent-band transmission channel module is configured to transmit a signal of an adjacent frequency band by adopting an independent physical channel, or by sharing the transmission channel with the transceiver unit;
the adjacent-band data processing module is configured to process a data stream which is from a network side and used for performing auxiliary signal transmission to the adjacent channel of the transmission channel of the transceiver unit 101.

Preferably, the adjacent-band auxiliary signal transmission unit is a module independently set in the wireless communication device, or is set in a same functional module with the transceiver unit.

Preferably, the adjacent-band auxiliary signal transmission control unit is further configured to monitor a transmitting-receiving isolation of a repeater.

Preferably, the wireless communication device further comprises a channel parameter control unit, which is configured to control a channel parameter of the transceiver unit.

Preferably, the wireless communication device further comprises a wireless environment detecting unit and a second antenna unit, wherein
the wireless environment detecting unit comprises one or more reception channels and signal processing units, and is configured to detect wireless environment of a geographical location where the wireless communication device is located;
the second antenna unit is coupled with a sensor of the wireless environment detecting unit, wherein the sensor is configured to perform wireless environment measurement to a location where the wireless environment detecting unit is.

Preferably, the wireless environment detecting unit is a module independently set in the wireless communication device, or is set in a same functional module with the transceiver unit.

A system for performing auxiliary signal transmission for an adjacent channel comprises a network side, one or more than one wireless access point and a wireless terminal, wherein
the network side comprises an adjacent-band auxiliary signal transmission management unit, which is configured to perform auxiliary signal transmission management to an adjacent frequency band of a working frequency band of the wireless access point requiring auxiliary signal transmission;
the wireless access point is configured to determine and perform the auxiliary signal transmission according to management contents sent from the network side;
the wireless terminal is configured to receive a signal from the wireless access point.

Preferably, the wireless access point at a first geographical location is configured to transmit a first signal to a first geographical area through a transmission channel which is configured within a first frequency band, and transmit an auxiliary signal of an existing signal to a second geographical area on an adjacent channel of the transmission channel, wherein the existing signal is on a channel which is configured within an adjacent frequency band of the first frequency band and adjacent to the transmission channel within the first frequency band;
a radio frame of the auxiliary signal transmitted by the wireless access point at the first geographical location is kept synchronous with that of the existing signal on the adjacent channel, at the first geographical location.

Preferably, the wireless access point is a bidirectional wireless communication device, a downlink channel is deployed within the first frequency band, and an uplink channel is deployed within the first frequency band or other frequency bands;
the existing signal on the channel which is configured within the adjacent frequency band of the first frequency band and adjacent to the transmission channel within the first frequency band is transmitted by a transmitter at other geographical location out of the first geographical location;
the first geographical location is in an effective coverage area of the existing signal on the adjacent channel of the transmission channel;
the first geographical area and the second geographical area are the same; or the first geographical area is included in the second geographical area.

It can be concluded from the technical solution provided by the present invention that the technical solution comprises: selecting, from adjacent channels of a transmission channel of the wireless communication device, an adjacent channel requiring and allowing auxiliary signal transmission of an existing signal on the adjacent channel; determining an auxiliary signal generating mode for the existing signal on the selected adjacent channel; generating an auxiliary signal locally at a place where the wireless communication device is located according to the determined auxiliary signal generating mode, and transmitting an auxiliary signal on a corresponding adjacent channel. Through the auxiliary signal transmission for the adjacent channel of the transmission channel of the wireless communication device, namely increasing the power of a wireless signal on an adjacent channel of a working channel, the solution of the present invention suppresses the interference to the adjacent channel from the transmission channel of the wireless communication device, reduces the guard band between the transmission channel of the wireless communication device and the adjacent channel, increases the usage efficiency of frequency spectrum, and improves the coverage performance of the adjacent channel of the transmission channel of the wireless communication device.

### Brief Description of the Drawings

Fig. 1 shows a flowchart of a method for performing auxiliary signal transmission for an adjacent channel in accordance with an embodiment of the present invention;
Fig. 2(a) shows a first schematic diagram of auxiliary signal transmission for a channel within an adjacent frequency band;
Fig. 2(b) shows a second schematic diagram of auxiliary signal transmission for a channel within an adjacent frequency band;
Fig. 2(c) shows a third schematic diagram of auxiliary signal transmission for a channel within an adjacent frequency band;
Fig. 3 shows a structural diagram of an access node in accordance with an embodiment of the present invention;
Fig. 4 shows another structural diagram of an access node in accordance with an embodiment of the present invention;
Fig. 5(a) shows a structural diagram of a system for performing auxiliary signal transmission for an adjacent channel in accordance with an embodiment of the present invention;
Fig. 5(b) shows another structural diagram of a system for performing auxiliary signal transmission for an adjacent channel in accordance with an embodiment of the present invention;
Fig. 6(a) shows a schematic diagram of a working frequency band and its adjacent frequency band of a wireless communication device within an idle television broadcasting frequency band;
Fig. 6(b) shows a schematic diagram that a wireless communication device establishes a backhaul within an idle television broadcasting frequency band for an access point of a microcell;
Fig. 7(a) shows a schematic diagram that a downlink channel in a working frequency band of a wireless communication device is adjacent to a television broadcasting channel;
Fig. 7(b) shows a schematic diagram that a wireless communication device transmits an auxiliary signal to a terrestrial television broadcasting channel adjacent to a working channel of the wireless communication device;
Fig. 8(a) shows a schematic diagram that a wireless communication device in a microcell configures a bidirectional channel or a unidirectional channel within uplink and downlink guard bands of a Frequency Division Duplex (FDD) system; and
Fig. 8(b) shows a schematic diagram that a wireless communication device in a microcell performs auxiliary signal transmission for a downlink channel of an FDD system.

### Detailed Description of the Embodiments

First of all, meanings of technical terms adopted in the embodiments of the present invention are defined below.

A wireless communication device of the embodiments of the present invention can be a base station or a terminal.

A first frequency band is a frequency band within which the wireless communication device of the embodiments of the present invention configures a working channel; and the first frequency band is also called a residing frequency band or a working frequency band. The wireless communication device configures at least one transmission channel within the working frequency band. Under a condition that the wireless communication borrows, within a frequency band except its licensed frequency band, a frequency band in a short-term residing mode to deploy a channel, the frequency band borrowed by the wireless communication device is also called the working frequency.

The working frequency band of the wireless communication device belongs to one of the following frequency bands: 1) idle frequency bands in the frequency bands which are licensed to be used by a television broadcasting system; 2) frequency bands which are licensed to be used by a cellular mobile communication system; 3) license-free frequency bands. Preferably, according to the different use modes, the working frequency band of the wireless communication device can be one of the following situations: 1) unpaired frequency bands which are used in a TDD mode; 2) paired frequency bands which are used in an FDD mode; 3) frequency bands used for unidirectional downlink transmission. A frequency location and bandwidth of the working frequency band and wireless channels within the working frequency band may change dynamically, or, they are configured in a static mode or in a quasi-static mode.

A first adjacent frequency band is a frequency band that is adjacent to the working frequency band, and the frequency of which is lower than the working frequency. An active wireless channel may or may not exist within the first adjacent frequency band, and the latter case means the first adjacent frequency band is an idle frequency band. Correspondingly, a first adjacent channel is a channel that is adjacent to the transmission channel configured within the working frequency band, and the coverage frequency of which is lower than the frequency used by the transmission channel.

A second adjacent frequency band is a frequency band that is adjacent to the working frequency band, and the frequency of which exceeds the working frequency. An active wireless channel may or may not exist within the second adjacent frequency band, and the latter case means the second adjacent frequency band is an idle frequency band. Correspondingly, a first adjacent channel is a channel that is adjacent to the transmission channel configured within the working frequency band, and the coverage frequency of which exceeds the frequency used by the transmission channel.

Specifically, because the path loss causes a relatively weak signal within the adjacent frequency band after a signal that is transmitted by a non-locally deployed transmitter within the first adjacent frequency band and/or the second adjacent frequency band reaches vicinity of the location where a local transmitter is, out-of-band leakage power of the local transmitter will approach or exceed the power of the signal within the first adjacent frequency band and/or the second adjacent frequency band; that is to say, the signal within the first adjacent frequency band and/or the second adjacent frequency band around the local transmitter cannot be received normally. Thus, the locally deployed transmitter tends to cause adjacent-band interference to the signal transmitted by the non-locally deployed transmitter which operates within the frequency band adjacent to the working frequency band of the local transmitter.

An existing channel means a wireless channel that has existed before establishment of the working channel. There may be existing channels within both an adjacent frequency band and a non-adjacent frequency band.

A first guard band is a frequency band between the wireless channel within the working frequency band and the wireless channel within the first adjacent frequency band. The first guard band can be one of the following situations: 1) a sub-band of the working frequency band; 2) a sub-band of the first adjacent frequency band; 3) the sum of bandwidth of the sub-band of the working frequency band and the sub-band of the first adjacent frequency band. A second guard band is a frequency band between the wireless channel within the working frequency band and the wireless channel within the second adjacent frequency band. The second guard band can be one of the following situations: 1) a sub-band of the working frequency band; 2) a sub-band of the second adjacent frequency band; 3) the sum of bandwidth of the sub-band of the working frequency band and the sub-band of the second adjacent frequency band.

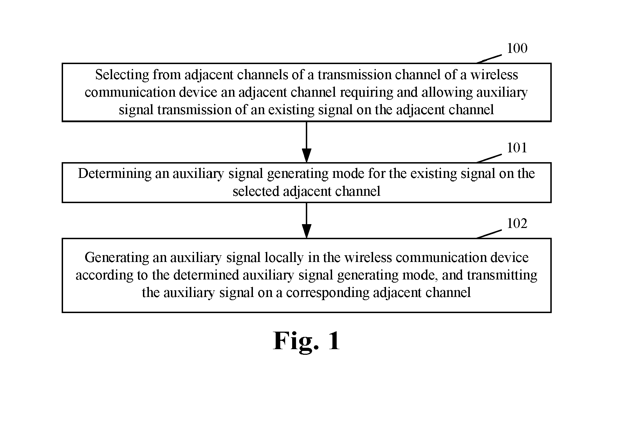

Fig. 1 shows a flowchart of a method for performing auxiliary signal transmission for an adjacent channel in accordance with an embodiment of the present invention. As shown in Fig. 1, the method comprises the following steps.

Step 100: An adjacent channel requiring and allowing auxiliary signal transmission of an existing signal on the adjacent channel is selected from adjacent channels of a transmission channel of the wireless communication device. In the step, the selected adjacent channel is an adjacent channel requiring and allowing auxiliary signal transmission.

First, according to a frequency location f and bandwidth BW covered by the transmission channel of the wireless communication device, a network side or the wireless communication devices selects, within left and right adjacent frequency bands of the transmission channel of the wireless communication device and in a predetermined frequency range f_OB, a channel meeting all of the following conditions as the adjacent channel requiring auxiliary signal transmission:
1) a signal on the adjacent channel is transmitted by a transmitter out of a geographical location where the wireless communication device is located;
2) on the geographical location where the wireless communication device is located, power/intensity of the existing signal on the adjacent channel exceeds a predetermined first power threshold that can be received normally;
3) on the geographical location where the wireless communication device is located, the power/intensity of the existing signal on the adjacent channel is lower than the second power threshold that is free from interference from out-of-band leakage power of the transmission channel of the wireless communication device.

Note that, if there is no adjacent channel requiring auxiliary signal transmission, and all the frequency bands are idle frequency bands, it is indicated that transmission of the wireless communication device within the working frequency band of the wireless communication device does not cause interference to the existing channel, and there is no need to perform auxiliary signal transmission for the adjacent channel.

All the adjacent channels requiring auxiliary signal transmission of the wireless communication device compose an auxiliary signal transmission channel set S(Nch).

In this step, after the auxiliary signal transmission channel set S(Nch) composed of the adjacent channels requiring auxiliary signal transmission is obtained, if the set is not a null set, continue to determine whether these adjacent channels requiring auxiliary signal transmission are allowed; if the set is a null set, it is regarded that the wireless communication device is a wireless communication device which does not need to perform auxiliary signal transmission for its adjacent channels.

Subsequently, the network side or the wireless communication device removes a channel meeting one of the following conditions from the auxiliary signal transmission channel set S(Nch) composed of the adjacent channels requiring auxiliary signal transmission:
1) technically not allowed: the auxiliary signal transmission to the adjacent channel will have inacceptable impacts on the system operating on the adjacent channel, specifically, these adverse impacts comprise, but are not limited to, one of the following: a) the auxiliary signal transmission of a signal of a cell edge in a cellular mobile communication system destroys the spatial multiplexing of frequency and causes increase of cell interference; b) adding the auxiliary signal causes exception of switching process of the cellular mobile communication system on the adjacent channel; c) the auxiliary signal transmission of a signal transmitted by a satellite positioning system causes increase of positioning error; d) the auxiliary signal transmission to radar causes breakdown of a radar system;
2) managerially not allowed: for example, an owner of a system operating on the adjacent channel refuses to perform auxiliary signal transmission to the channel on which the system operates.

An adjacent channel set S(ATch) requiring and allowing auxiliary signal transmission is obtained by removing the adjacent channel not allowing to perform auxiliary signal transmission for the existing signal on the adjacent channel from the auxiliary signal transmission channel set S(Nch) composed of the adjacent channels requiring auxiliary signal transmission, according to above conditions.

If the adjacent channel set S(ATch) requiring and allowing auxiliary signal transmission is not a null set, enter Step 101; if the set is a null set, it is regarded that the wireless communication device is a wireless communication device which does not allow performing auxiliary signal transmission to the existing signal on the adjacent channels of the wireless communication device.

Step 101: An auxiliary signal generating mode is determined for the existing signal on the selected adjacent channel.

The network side or the wireless communication device makes the following judgments to each channel in the adjacent channel set S(ATch) requiring and allowing auxiliary signal transmission, respectively.

First, it is determined whether the auxiliary signal can be generated for the adjacent channel through a local signal reconstruction mode, if so, the adjacent channel is included in a channel set S(reconstruction) to which the auxiliary signal transmission is performed by the local signal reconstruction mode. If all of the following three conditions are met, it is determined that the auxiliary signal can be generated for the adjacent channel through the local signal reconstruction mode:
1) the network side is able to obtain a data stream needed for generating the auxiliary signal; because the adjacent channel may be used by other operators, the network, in which the wireless communication device is and which belongs to a certain operator, is not always able to obtain the needed data stream;
2) the network side has a channel for transmitting the data stream needed for generating the local auxiliary signal to the wireless communication device;
3) the wireless communication device has a capability of generating the local auxiliary signal on the adjacent channel; the wireless communication device may perform generation of auxiliary signals for multiple adjacent channels, and the number of adjacent channels supported by the wireless communication device is limited.

If it is determined that the auxiliary signal cannot be generated for the adjacent channel through the local signal reconstruction mode, then it is determined whether the auxiliary signal can be generated for the adjacent channel through a local signal reproduction (local radio frequency direct amplifying) mode, if so, the adjacent channel is included in a channel set S(repeater) to which the auxiliary signal transmission is performed by the local radio frequency direct amplifying mode, otherwise, the adjacent channel is included in a channel set S(Non-ATch) for which auxiliary signal transmission is aborted.

The radio frequency direct amplifying mode comprises one of the following two modes:
1) a common-frequency radio frequency direct amplifying mode: a radio frequency repeater device receives the existing signal on the adjacent channel and generates the auxiliary signal on the adjacent channel at frequency of the existing signal;
2) a different-frequency radio frequency direct amplifying mode: a radio frequency repeater device receives a radio frequency signal on a frequency band different from the frequency band occupied by the adjacent channel, switches a carrier frequency of the received radio frequency signal to the frequency band occupied by the adjacent channel, and generates the auxiliary signal by performing radio frequency power amplification within the frequency band occupied by the adjacent channel. The different-frequency radio frequency direct amplifying mode is advantaged by being capable of avoiding self-excitation problem of the common-frequency radio frequency direct amplifying mode and outputting the auxiliary signal with relatively large power.

The method for determining whether the auxiliary signal can be generated for the adjacent channel through the local signal reproduction (local radio frequency direct amplifying) mode is that the wireless communication device has a capability of implementing the radio frequency direct amplifying mode on the adjacent channel. The wireless communication device may implement the radio frequency direct amplifying mode on multiple adjacent channels of the transmission channel, and the number of adjacent channels supported by the wireless communication device is limited.

After completing above-mentioned judgments of the step to each channel in the adjacent channel set S(ATch) requiring and allowing auxiliary signal transmission, the adjacent channel set S(ATch) is divided into the channel set S(reconstruction) to which the auxiliary signal transmission is performed by the local signal reconstruction mode, the channel set S(repeater) to which the auxiliary signal transmission is performed by the local radio frequency direct amplifying mode, and the channel set S(Non-ATch) for which auxiliary signal transmission is aborted.

If the first two sets are null sets, the process is ended, and it is regarded that the wireless communication device is a wireless communication device which cannot perform auxiliary signal transmission. If one of the first two sets is not a null set, enter Step 102.

The step further comprises the following judgements performed by the wireless communication device: it is determined whether all the channel bandwidth within the adjacent frequency band is used for efficiently covering the location where the wireless communication device is located, if so, it is needed to perform auxiliary signal transmission to signals on the whole adjacent channel, otherwise, it is only needed to perform auxiliary signal transmission to signals within part of the frequency band on the adjacent channel. In this way, the channel, which covers the location where a wireless communication device actually exists, within the adjacent frequency band is determined, and only the channel like this requires auxiliary signal transmission. Moreover, a single frequency networking scenario in the television broadcasting is distinguished, thus, an RF repeater is added at a location, where the transmitter cannot efficiently cover, in the single frequency network of the television broadcasting.

Only a sub-channel or sub-band in the adjacent channel which efficiently covers the location where the wireless communication device is located requires auxiliary signal transmission. The following judgments are made to the adjacent channel requiring and allowing auxiliary signal transmission.

Step 102: The auxiliary signal is generated locally at a place where the wireless communication device is located according to the determined auxiliary signal generating mode, and an auxiliary signal is transmitted on a corresponding adjacent channel.

The wireless communication device follows principles of time synchronization, frequency synchronization, symbol synchronization and geographical area synchronization to transmit the auxiliary signal. Specifically, the principles of time synchronization, frequency synchronization, symbol synchronization and geographical area synchronization mean that the transmission of an auxiliary signal should maintain the following relation between the auxiliary signal transmitted on the adjacent channel and the existing signal on the adjacent channel, on the geographical location/geographical space where the wireless communication device is located.

The time synchronization is that a radio frame of the auxiliary signal transmitted on the adjacent channel and a radio frame of the existing signal on the adjacent channel are kept synchronous in the initial time at the geographical location where the wireless communication device is located. Specifically, the time synchronization means the moment when the frame header of the radio frame of the auxiliary signal transmitted by the wireless communication device leaves an antenna aperture is the same as that when the frame header of the radio frame of the existing signal bearing the same information symbol reaches the antenna aperture, or the time difference between the frame headers is within an allowable time range.

The frequency synchronization is that a carrier frequency of the auxiliary signal transmitted on the adjacent channel and a carrier frequency of the existing signal on the adjacent channel are strictly consistent.

The symbol synchronization is that a modulation and coding scheme (MCS) and a time and frequency location occupied by the information symbol which is transmitted on the adjacent channel as the auxiliary signal are strictly consistent with the MCS and the time and frequency location occupied by the information symbol in the existing signal on the adjacent channel.

The covered geographical/spatial area synchronization is that the geographical or spatial area covered by the auxiliary signal transmitted by the wireless communication device on the adjacent channel of the transmission channel of the wireless communication device is strictly consistent with or larger than that covered by a signal transmitted by the wireless communication device on the transmission channel of the wireless communication device.

In the step, different processes of auxiliary signal transmission are performed to the channel set S(repeater) to which the auxiliary signal transmission is performed by the local radio frequency direct amplifying mode and the channel set S(reconstruction) to which the auxiliary signal transmission is performed by the local signal reconstruction mode, so as to ensure the above-mentioned synchronizations.

When adopting the local radio frequency direct amplifying mode to transmit the auxiliary signal, the process of performing the auxiliary signal transmission to the channel set S(repeater) comprises: the wireless communication device performs radio frequency direct amplification to the existing signal on the adjacent channel according to predetermined transmission power; for keeping the covered geographical/spatial area synchronization, the adjacent-band transmission channel shares the transmission antenna with a transmission channel of a transceiver.

When adopting the local signal reconstruction mode to transmit the auxiliary signal, the process of performing the auxiliary signal transmission to the channel set S(repeater) comprises: local reconstruction is performed to the existing signal of the adjacent channel within the adjacent frequency band. The specific implementation comprises the following steps.

The first step: a base band signal, or an intermediate-frequency signal, or a data stream of the existing signal on the adjacent channel is transmitted to the wireless communication device through a backhaul.

The second step: the wireless communication device buffers the base band signal, or the intermediate-frequency signal, or the data stream of the existing signal on the adjacent channel, and obtains a pre-transmission signal that has a strictly same time domain structure and frequency domain structure within the base band as the existing signal, after performing corresponding process aiming at the specific data form of the data stream, or the base band signal, or the intermediate-frequency signal. For example, Digital/Analogue (D/A) conversion is performed to the buffered intermediate-frequency signal according to the requirement of keeping time synchronization locally with the existing signal, and the converted signal is up-converted to the frequency which is the same as the carrier frequency of the existing signal, furthermore, the up-converted signal is transmitted to the area which is the same as the area covered by the signal on the transmission channel after being power-amplified.

The third step: the auxiliary signal of the existing signal and the existing signal are synchronously transmitted. The step specifically comprises: frame headers of the radio frame of the auxiliary signal transmitted by the wireless communication device and the radio frame where the existing signal is are aligned, wherein the time frequency locations where the same information symbols appear on the aligned two radio frames are same. For example, when the existing signal is a digital terrestrial broadcasting signal based on Orthogonal Frequency Division Multiplexing (OFDM), the wireless communication device follows the principles of time synchronization, frequency synchronization, symbol synchronization and geographical area synchronization to realize above-mentioned synchronizations kept between the auxiliary signal and the existing signal at the location where the wireless communication device is located and its neighbouring area.

When the wireless communication device transmits the auxiliary signal, the specific implementation of keeping the geographical area synchronization between the auxiliary signal and the transmission channel configured within the working frequency band can be one of the following:
when the wireless communication device transmits the auxiliary signal, the auxiliary signal is transmitted using a same antenna as that used by the transmission channel configured within a working frequency band by the wireless communication device;
when the wireless communication device transmits the auxiliary signal, the auxiliary signal is transmitted using the same antenna as that used by the transmission channel configured within the working frequency band by the wireless communication device, but different pre-coding processes are applied to the transmission signal within the working frequency band and the auxiliary signal; for example, the transmission signal within the working frequency band is transmitted by a beam forming way, and the auxiliary signal is transmitted by a fixed beam way, however, a fixed beam covers the area that a formed beam may cover;
when the wireless communication device transmits the auxiliary signal, the auxiliary signal is transmitted using an antenna different from that used by the transmission channel configured within the working frequency band by the wireless communication device, for example, the auxiliary signal is transmitted by an omnidirectional antenna, and the transmission signal of the transmission channel within the working frequency band is transmitted by a directional antenna; however, the omnidirectional antenna covers the area that the directional antenna is able to cover.

Preferably, except performing auxiliary signal transmission of the existing signal on the adjacent channel of the transmission channel of the wireless communication device, Step 102 further comprises: a beacon signal is sent within the frequency band occupied by the adjacent channel. The beacon signal comprises the identification information of the wireless communication device.

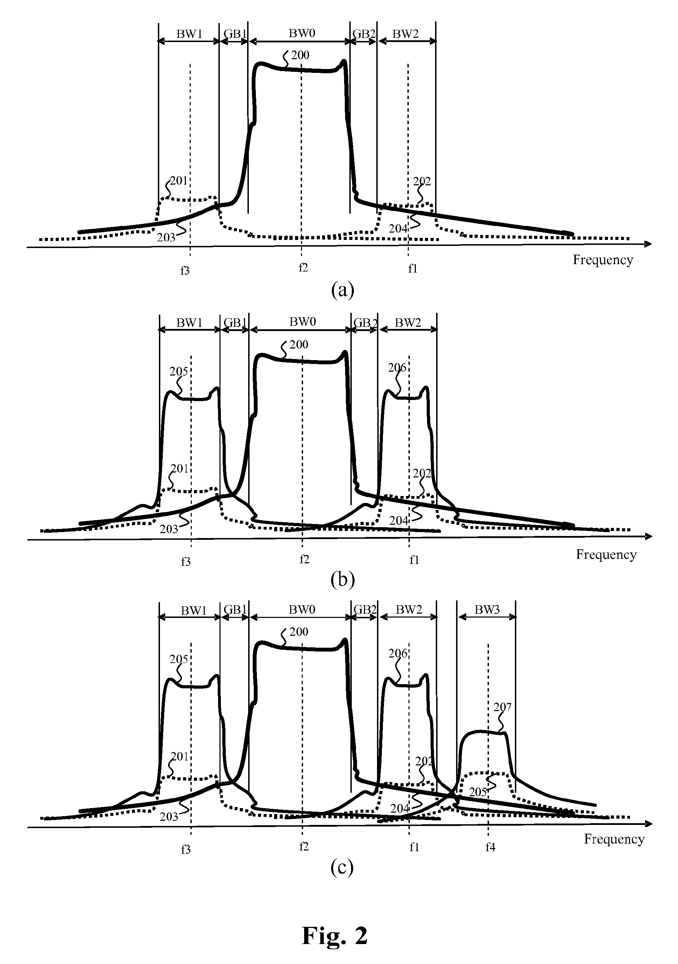

Fig. 2 shows a schematic diagram of auxiliary signal transmission for a channel within an adjacent frequency band. In Step 100, the method for determining the adjacent channel requiring auxiliary signal transmission specifically comprises a static determining way and a dynamic determining way.

The dynamic determining way comprises processes as follows. A network side uses a result of detecting wireless environment to determine a centre frequency value f2 and bandwidth BW0 of a working frequency band or a candidate working frequency 200 which is occupied by the transmission channel of the wireless communication device, as shown in Fig. 2(a). Then, it is determined whether there is other wireless channel existing in a predetermined frequency range f_OB through the system frequency deployment, specifically, the network side determines whether there is other wireless channel existing in f_OB according to the prior knowledge of frequency usage in the predetermined frequency range f_OB and with reference to the result of detecting the wireless environment. The specific method for determining the adjacent channel requiring auxiliary signal transmission comprises: if online-measured out-of-band leakage power, within a sub-band N in the frequency range f_OB, of the transmission signal of the transmission channel within the candidate working frequency band 200 exceeds power that the normal working of the existing channel within the sub-band N can tolerate, or, if according to an out-of-band leakage power index of radio frequency technology regulations, the out-of-band leakage power, within the sub-band N in the frequency range f_OB, of the transmission signal of the transmission channel within the candidate working frequency band 200 exceeds interference power that the current signal power of the existing channel can tolerate, then the channel within the sub-band N is determined as the channel requiring auxiliary signal transmission. A typical value of the predetermined frequency range f_OB is 10MHz.

As shown in Fig. 2(a), the static determining way comprises: the adjacent channel requiring auxiliary signal transmission is determined according to the centre frequency value f2 and bandwidth BW0 of the working frequency band or the candidate working frequency 200 which is occupied by the transmission channel of the wireless communication device and planned for the wireless communication device, and with reference to the known actuality of spectrum utilization of various wireless communication systems deployed in the predetermined frequency range f_OB. The specific method for determining the adjacent channel requiring auxiliary signal transmission comprises: if according to the out-of-band leakage power index of the radio frequency technology regulations, the out-of-band leakage power, within the sub-band N in the frequency range f_OB, of the transmission signal of the transmission channel within the candidate working frequency band 200 exceeds, in some application scenarios, the power that the normal working of the existing channel within the sub-band N can tolerate, then the channel within the sub-band N is determined as the channel requiring auxiliary signal transmission. If it is found, according to the above steps, that there is no wireless channel existing in the predetermined frequency range f_OB, and all the frequency bands are idle frequency bands, then the transmission of the wireless communication device within its working frequency band 200 does not cause interference to the existing channel, then there is no need to adopt auxiliary signal transmission.

If it is found, according to the above steps, that there is a wireless channel existing in the predetermined frequency range f_OB, for example, the channel 200 and the channel 201 shown in Fig. 2(a) exist, and if these existing channels meet all of the three conditions in Step 100, then the channel 200 and the channel 201 are regarded as the adjacent channels requiring auxiliary signal transmission.

Preferably, Step 100 further comprises: according to a maximum or typical value of auxiliary signal transmission power applied to the adjacent channel, the out-of-frequency band leakage power of the auxiliary signal of the adjacent channel to the adjacent channel is determined, as shown in Fig. 2(c), if the out-of-band leakage power of the adjacent channel 206 corresponding to the centre frequency f1 and bandwidth BW2 generated in the adjacent channel 207 (with centre frequency f4 and bandwidth BW3) of the adjacent channel 206 exceeds a predetermined threshold, the method further comprises: auxiliary signal transmission is performed to the adjacent channel 207 of the adjacent channel 206, too.

Through the auxiliary signal transmission to the adjacent channel of the transmission channel of the wireless communication device, the method in accordance with the embodiments of the present invention suppresses the interference to the adjacent channel from the transmission channel of the wireless communication device, reduces the guard band between the transmission channel of the wireless communication device and the adjacent channel, increases the usage efficiency of frequency spectrum, and improves the coverage performance of the adjacent channel of the transmission channel of the wireless communication device.

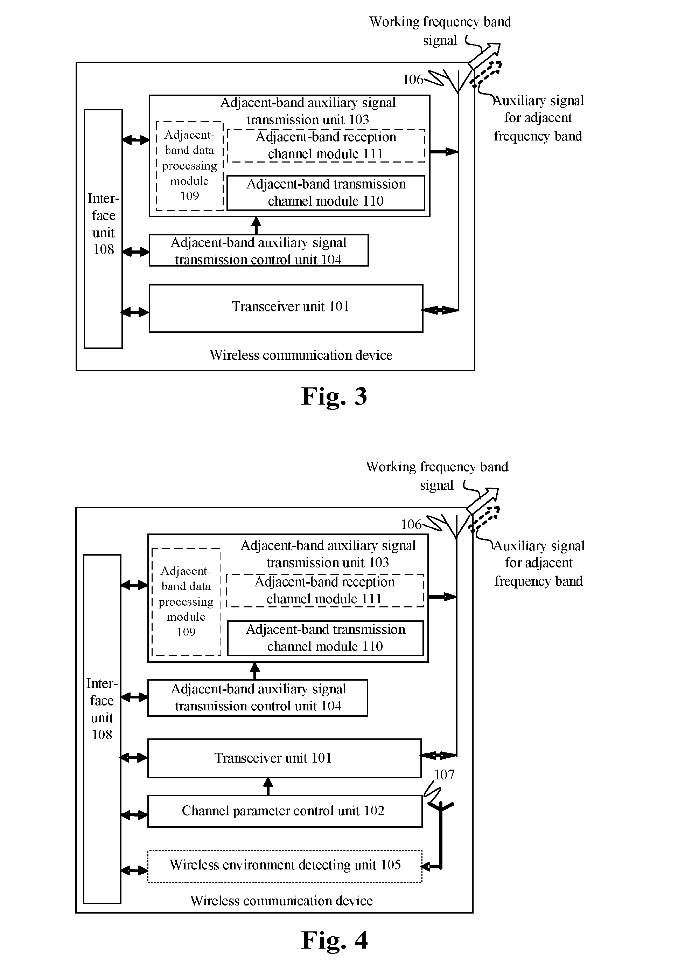

Fig. 3 shows a structural diagram of an access node in accordance with an embodiment of the present invention. As shown in Fig. 3, the wireless communication device comprises a transceiver unit 101, an adjacent-band auxiliary signal transmission unit 103, an adjacent-band auxiliary signal transmission control unit 104, a first antenna unit 106 and an interface unit 108. Specifically, the function of each composition unit is introduced as follows.

The transceiver unit 101 is a communication unit designed according to one or more technical specifications of network side access points of a wireless communication system, and a radio frequency channel composition mode of the transceiver unit 101 is:
at least one transmission channel is included; under this situation, the transceiver unit 101 is configured to perform transmission of a unidirectional downlink signal within the working frequency band, wherein the transmitted signal comprises: a point-to-multipoint multimedia broadcast signal and a point-to-point downlink service signal; and/or
a transmission channel and a reception channel working in a TDD mode are included; under this situation, the transceiver unit 101 is configured to perform bidirectional communication within the working frequency band; and/or
a transmission channel and a reception channel working in an FDD mode are included; under this situation, the transceiver unit 101 is configured to perform bidirectional communication within the working frequency band.

Preferably, the transmission channel of the transceiver unit 101 transmits one or multiple carriers, and the reception channel of the transceiver unit 101 receives one or multiple carriers.

Preferably, the transceiver unit 101 is realized according to one of the following modes: a complete base band processing module and a radio frequency processing module are included; or, only the radio frequency processing module is included, that is, a Remote Radio Unit (RRU) technology in the existing technologies is adopted, and the data subjected to a base band process need to be obtained through the interface unit 108.

The adjacent-band auxiliary signal transmission unit 103 is configured to transmit an auxiliary signal on an adjacent channel selected from adjacent channels of the transmission channel of the transceiver unit 101, and the composition mode of the adjacent-band auxiliary signal transmission unit 103 is one or both of the following two modes: (1) the adjacent-band auxiliary signal transmission unit 103 comprises an adjacent-band transmission channel module 110 and an adjacent-band reception channel module 111; (2) the adjacent-band auxiliary signal transmission unit 103 comprises the adjacent-band transmission channel module 110 and an adjacent-band data processing module 109.

Specifically, the adjacent-band transmission channel module 110 is configured to transmit a signal of an adjacent frequency band, which is realized by one of the following two modes: realizing by adopting an independent physical channel, that is, adopting a physical channel different from the transmission channel of the transceiver unit 101; or, realizing by sharing the transmission channel with the transceiver unit 101, at this point, the bandwidth of the transmission channel of the transceiver unit 101 covers its working frequency band and the adjacent frequency band of the working frequency band, the transmission channel of the transceiver unit 101 also transmits an auxiliary signal within its adjacent frequency band, except transmitting a signal on its residing channel.

The adjacent-band reception channel module 111 is configured to receive a signal of the adjacent frequency band, which is realized by one of the following two modes: realizing by adopting an independent physical channel, that is, adopting the physical channel different from the reception channel of the wireless environment detecting unit 105 shown in Fig. 4; or realizing by sharing the reception channel with the wireless environment detecting unit 105, at this point, one reception channel of the this wireless environment detecting unit 105 is configured on one adjacent channel of the transceiver unit 101 to receive the existing signal on the adjacent channel, wherein the adjacent channel is an adjacent channel requiring auxiliary signal transmission.

Note that, when the adjacent-band transmission channel module 110 shares the transmission channel with the transceiver unit 101, an output signal of the adjacent-band reception channel module 111 serves as an input signal of the shared transmission channel of the transceiver unit 101; the signal is input from an analogue channel input point of the transmission channel of the transceiver unit 101 and transmitted to a specific area via the transmission channel shared with the transceiver unit 101.

The adjacent-band data processing module 109 is configured to process a data stream which is from the network side and used for performing auxiliary signal transmission to the adjacent channel of the transmission channel of the transceiver unit 101, and complete processes needed before outputting the data stream to the adjacent-band transmission channel module 110. Specifically, the processes needed before outputting the data stream for performing auxiliary signal transmission to the adjacent-band transmission channel module 110 comprise: buffering the data stream; and/or, performing synchronization control for the auxiliary signal; and/or, performing D/A conversion, and then transmitting the data stream to the adjacent-band transmission channel module 110. Note that, if the adjacent-band transmission channel module 110 shares the transmission channel with the transceiver unit 101, a digital intermediate-frequency signal sent from the network side is directly sent to the transmission channel shared with the transceiver unit 101, and the D/A conversion before transmission is completed by the transceiver unit 101.

When the wireless communication device adopts a structure of Base Band Unit (BBU) and RRU, the adjacent-band data processing module 109 can be set in either the BBU or the RRU.

According to Step 101 in Fig. 1, if the auxiliary signal generating mode is local reconstruction of the existing signal on the adjacent channel, then the adjacent-band data processing module 109 in the adjacent-band auxiliary signal transmission unit 103 performs signal reconstruction process to the data stream which is from the interface unit 108 and used for generating the existing signal within the adjacent frequency band. A reconstruction method is performing conversion of a digital signal to an analogue signal to the data stream, obtaining a reconstruction signal whose transmission time, transmission frequency, transmitted information symbol and the MCS of the information symbol are completely consistent with that of the existing signal, and transmitting the reconstruction signal to the corresponding adjacent frequency band through the adjacent-band transmission channel module 110.

If the auxiliary signal generating mode is implemented by the way of radio frequency analogue signal forwarding, or called radio frequency direct amplifying, then the adjacent-band reception channel module 111 uses an antenna receiving a signal from the adjacent frequency band, and the adjacent-band transmission channel module 110 uses an antenna transmitting a signal to the adjacent frequency band. For improving the transmitting-receiving isolation performance of the radio frequency repeater, the receiving antenna and the transmitting antenna can be two independent and separately installed antennae. For ensuring that the range covered by the auxiliary signal transmission within the adjacent frequency band is as consistent with the range radiated by the transmission signal within the working frequency band as possible, the adjacent-band transmission channel module 110 uses the same antenna unit 106 with the transmission channel of the transceiver unit 101.

Note that, the adjacent-band auxiliary signal transmission unit 103 can be either a module independently set in the wireless communication device, or set in the same functional module with the transceiver unit 101. When serving as the independently set module, the adjacent-band auxiliary signal transmission unit 103 is installed at the same geographical location with the transceiver unit 101. When serving as a functional module which is designed to be integrated with the transceiver unit 101, the adjacent-band auxiliary signal transmission unit 103 can share the same power amplifier and antenna with the transceiver unit 101; at this point, within the frequency band covered by the same power amplifier, a part of the frequency band serves as the working channel of the transceiver unit 101, and another part of the frequency band serves as the adjacent channels of the working channel.

The adjacent-band auxiliary signal transmission control unit 104 is configured to control a transmission channel parameter and a transmission mode of the adjacent-band auxiliary signal transmission unit 103. Specifically, the following control over parameter is included: controlling a working frequency point of the adjacent-band transmission channel module 110; and/or, controlling bandwidth of the transmission channel of the adjacent-band transmission channel module 110; and/or, controlling the transmission power of the adjacent-band transmission channel module 110.

Preferably, the adjacent-band auxiliary signal transmission control unit 104 comprises a local signal generating module (not shown in Fig. 3 and Fig. 4), which is configured to generate predetermined signal waveform, and transmit, within the adjacent frequency band of the transmission channel of the transceiver unit 101 requiring auxiliary signal transmission, the predetermined signal waveform to the area covered by the antenna unit 106.

Preferably, when the adjacent-band auxiliary signal transmission unit 103 implements auxiliary signal transmission for the adjacent channel in the direct amplifying mode, the adjacent-band auxiliary signal transmission control unit 104 is further configured to monitor the transmitting-receiving isolation of the repeater, so as to avoid self-excitation of the repeater.

The interface unit 108 comprises one or more of the following modules supporting signal transmission: modules for implementing digital communication with other communication devices, such as an Ethernet protocol module and a module supporting the Open Base Station Architecture Initiative (OBSAI) or Common Public Radio Interface (CPRI) or Open Radio equipment Interface (ORI) protocol; and/or, an analogue signal transmission channel implementing communications with a reception channel of the repeater; and/or, a transmission channel for communications among internal units of the wireless communication device.

The first antenna unit 106 is configured to transmit and receive a signal passing the wireless communication device, and comprises one or more antenna units, wherein the antenna unit can be either a directional antenna unit or an omnidirectional antenna unit, preferably the directional antenna unit.

Fig. 4 shows another structural diagram of an access node in accordance with an embodiment of the present invention. As shown in Fig. 4, preferably, the working frequency point, or the working bandwidth, or the adopted wireless communication technology regulations of the transceiver unit 101 and the adjacent-band auxiliary signal transmission unit 103 of the wireless communication device can be adjusted or configured in a certain range; specifically, they are adjusted or configured by the channel parameter control unit 102 and the adjacent-band auxiliary signal transmission control unit 104 shown in Fig. 4.

Specifically, the channel parameter control unit 102 is configured to control a channel parameter of the transceiver unit 101, the specific controlled channel parameter comprises at least one of the following: the center frequency of the channel; the modulation bandwidth of the channel; and the maximum transmission power of the channel.

Preferably, as shown in Fig. 4, except above-mentioned functional units, the wireless communication device further comprises a wireless environment detecting unit 105 and a second antenna unit 107.

Specifically, the wireless environment detecting unit 105 comprises one or more reception channels and signal processing units, and is configured to detect the wireless environment of the geographical location where the wireless communication device is located. The specific content to be detected is one or more of the following parameters: location and bandwidth of the idle frequency band; and/or, signal power or power spectral density of the channel within the adjacent frequency band of the transmission channel within the working frequency band; and/or, types of the adjacent channels of the transmission channel within the working frequency band.

The wireless environment detecting unit 105 can be either a module independently set in the wireless communication device, or set in the same functional module with the transceiver unit 101. When serving as the independently set module, the wireless environment detecting unit 105 is installed at the same geographical location with the transceiver unit 101. When being designed to be integrated with the transceiver unit 101, the wireless environment detecting unit 105 can implement channel sharing according to the following two ways: the wireless environment detecting unit 105 and the transceiver unit 101 share part of the reception channel in a time division mode; or, the wireless environment detecting unit 105 and the adjacent-band reception channel module 111 in the adjacent-band auxiliary signal transmission unit 103 share the reception channel.

The second antenna unit 107 is configured to connect a sensor of the wireless environment detecting unit 105, wherein the sensor performs wireless environment measurement to the location where the wireless environment detecting unit 105 is. The second antenna unit 107 can be either an omnidirectional antenna or a directional antenna with adjustable direction.

The wireless environment detecting unit 105 uses the second antenna unit 107 and the first antenna unit 106 according to one of the following ways: using the second antenna unit 107 and the first antenna unit 106 in combination to detect the wireless environment; or, only using the first antenna unit 106 to detect the wireless environment, in this case, the wireless communication device no longer comprises the second antenna unit 107.

As shown in Fig. 3 and Fig. 4, the operation principle of the wireless communication device in accordance with an embodiment of the present invention is that the adjacent-band auxiliary signal transmission control unit 104 controls, according to control information sent from a network side, the adjacent-band auxiliary signal transmission unit 103 to transmit, within the frequency band requiring auxiliary signal transmission, the auxiliary signal through the first antenna unit 106 according to the mode specified by the control information. In the time interval when the adjacent-band auxiliary signal transmission unit 103 transmits the auxiliary signal, the channel parameter control unit 102 controls, according to the control information sent from the network side, the transceiver unit 101 to transmit, within the working frequency band of the transceiver unit 101, a signal through the first antenna unit 106.

According to the different auxiliary signal generating modes, the way of transmitting the auxiliary signal by the adjacent-band auxiliary signal transmission unit 103 is one of the following: 1) generating the auxiliary signal through local reproduction to the existing signal within the adjacent frequency band, that is, directly amplifying the wireless signal locally received within the adjacent frequency band requiring auxiliary signal transmission; 2) generating the auxiliary signal through local reconstruction to the existing signal within the adjacent frequency band, that is, obtaining from the interface unit 108 an orthogonal intermediate frequency modulation (I/Q) signal or a base band signal transmitted by the channel within the adjacent frequency band, generating a signal form which is strictly consistent with that of the existing wireless signal on the adjacent channel, and transmitting the signal on a specified frequency spectrum through the first antenna unit 106. The radio frame transmitted by the adjacent-band auxiliary signal transmission unit 103 keeps synchronization with the radio frame within its auxiliary adjacent frequency band, whether the adjacent-band auxiliary signal transmission unit 103 operates in the way of directly amplifying radio frequency signal or in the way of performing transmission signal reconstruction to the base band signal or the I/Q signal.

Furthermore, the adjacent-band auxiliary signal transmission unit 103 is controlled, by the adjacent-band auxiliary signal transmission control unit 104, to transmit a beacon signal within the same adjacent frequency band while transmitting the auxiliary signal, wherein the beacon signal can be used for: 1) identification sequence of the wireless communication device; 2) testing the transmitting-receiving isolation performance of the repeater when the repeater implements auxiliary signal transmission.

Furthermore, as shown in Fig. 4, if the transmission power is too large, the wireless environment detecting unit 105 is needed at the network side to measure the signal power or the power spectral density within the adjacent frequency band, for determining the maximum transmission power of the transceiver unit 101, and/or the guard bandwidth between the transmission frequency band used by the transceiver unit 101 and its adjacent frequency band, so as to prevent the out-of-band leakage power of the transceiver unit 101 from causing interference to its adjacent channel. On the basis that whether there is the auxiliary signal within the adjacent frequency band, the measurement to the signal power or the power spectral density within the adjacent frequency band, which is performed by the wireless environment detecting unit 105, can be either measurement to the existing signal or measurement to superposition signal of the existing signal and the auxiliary signal.

Except detecting the wireless environment, optionally, the adjacent-band auxiliary signal transmission unit 103 and the reception channel of the wireless environment detecting unit 105 together form the repeater. Under this situation, the wireless environment detecting unit 105 comprises one or more reception channels as a Low Noise Amplifier (LNA) front end of the repeater.

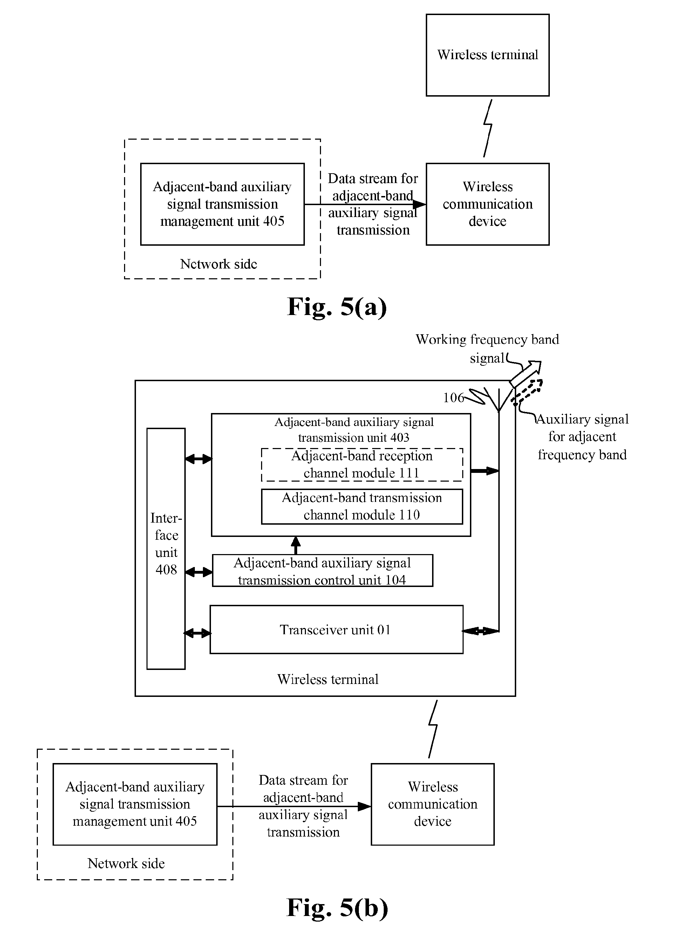

Fig. 5(a) shows a structural diagram of a system for performing auxiliary signal transmission for an adjacent channel in accordance with an embodiment of the present invention. As shown in Fig. 5(a), the system at least comprises a network side, one or more than one wireless communication device, and a wireless terminal.

The network side at least comprises an adjacent-band auxiliary signal transmission management unit 405, which is configured to perform auxiliary signal transmission management to an adjacent frequency band of a working frequency band of the wireless communication device requiring auxiliary signal transmission. The management contents at least comprise one of the following: determining the adjacent frequency band requiring auxiliary signal transmission; and/or, determining the mode of auxiliary signal transmission for the adjacent frequency band requiring auxiliary signal transmission, specifically, determining whether a local reproduction mode or a local reconstruction mode is adopted to implement the auxiliary signal transmission; and/or, distribution management to the data stream which is used for the auxiliary signal transmission of the adjacent frequency band.

The wireless communication device is configured to determine and perform auxiliary signal transmission according to the management contents sent from the network side. The composition of the wireless communication device can refer to the description of Fig. 3 and Fig. 4. The wireless communication device may be: a base station of a cellular mobile communication system, for example, a base station device complying with the 3GPP LTE technical specification or the 3GPP UMTS technical specification; or, an access point of a fixed wireless access system, for example, the wireless access device complying with the IEEE802.16 technical specification; or, an access point complying with the technical specifications of a cellular mobile communication system and used for microcell coverage, for example, a femtocell or a micro cell base station complying with the 3GPP LTE technical specification.

The wireless terminal is configured to receive a signal from the wireless communication device, and may be one of the following devices: a terminal which operates complying with the technical specification of the terminal side corresponding to the technical specification of base station side used by the wireless communication device; or, a terminal which has both the function of performing auxiliary signal transmission to the adjacent channel and the capability of the terminal operating complying with the technical specification of terminal side corresponding to the technical specification of base station side used by the wireless communication device, referring to Fig. 5(b), which shows another structural diagram of a system for performing auxiliary signal transmission for an adjacent channel in accordance with the embodiment of the present invention.

An operating process of the system for performing auxiliary signal transmission for the adjacent channel in accordance with the embodiment of the present invention comprises: the adjacent-band auxiliary signal transmission management unit 405 gathers information of the adjacent channel requiring auxiliary signal transmission of the wireless communication device, wherein the information comprises a frequency band location and service types within the frequency band location; the adjacent-band auxiliary signal transmission management unit 405 determines whether a local reconstruction mode can be adopted to perform auxiliary signal transmission to a specific adjacent channel of the wireless communication device, based on the transmission capability of a backhaul and features of the adjacent channel of each wireless communication device; the adjacent-band auxiliary signal transmission management unit 405 configures a transmission network, and transmits a data stream for the auxiliary signal transmission of the adjacent frequency band to the specific wireless communication device through the transmission network; after performing a pre-transmission process to the data stream which is transmitted to the locality and used for the auxiliary signal transmission of the adjacent frequency band, the wireless communication device performs auxiliary signal transmission within the corresponding adjacent frequency band to a channel within the adjacent frequency band, thereby suppressing the out-of-band interference to the adjacent channel from the working channel of the wireless communication device.

Through the method and system of the embodiments of the present invention, when transmitting a first signal to a first geographical area through a transmission channel configured within a first frequency band, a wireless communication device at a first geographical location also transmits an auxiliary signal of an existing signal to a second geographical area on an adjacent channel of a transmission channel, wherein the existing signal is a signal on a channel which is configured within the adjacent frequency band of the first frequency band and adjacent to the transmission channel within the first frequency band. Besides, the radio frame of the auxiliary signal transmitted by the wireless communication device is kept synchronous with the radio frame of the existing signal on the adjacent channel, at the first geographical location.

The wireless communication device is a bidirectional wireless communication device, wherein a downlink channel is deployed within the first frequency band, and an uplink channel is deployed within the first frequency band or other frequency bands.

The existing signal on the channel which is configured within the adjacent frequency band of the first frequency band and adjacent to the transmission channel within the first frequency band is transmitted by a transmitter at other geographical location out of the first geographical location; the first geographical location is in the effective coverage area of the existing signal on the adjacent channel of the transmission channel.

The first geographical area and the second geographical area are the same; or the first geographical area is included in the second geographical area.

The description below is made with reference to application of the method in accordance with the embodiments of the present invention in an actual system by giving examples.

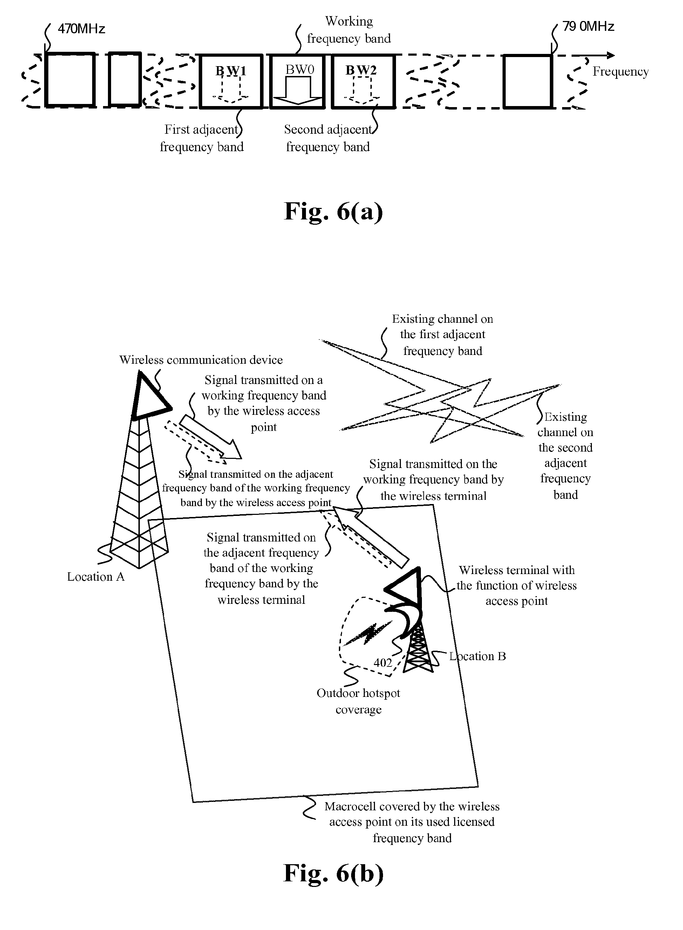

A first embodiment is a solution of implementing auxiliary signal transmission to an adjacent channel when the embodiment of the present invention is applied to an idle television broadcasting frequency band. Fig. 6(a) shows a schematic diagram of a working frequency band and its adjacent frequency band of a wireless communication device within an idle television broadcasting frequency band. Fig. 6(b) shows a schematic diagram that a wireless communication device establishes a backhaul within an idle television broadcasting frequency band for an access point of a microcell.

In the first embodiment, as shown in Fig. 6(a), when the wireless communication device is the one shown in Fig. 3, the transceiver unit 101 in the wireless communication device has the transmission-reception channels working within two different frequency bands; one is a first transceiver unit which operates within the idle frequency band of 470MHz to 790MHz and is designed complying with the technical specification of a Long Term Evolution (LTE) TDD base station, the other is a second transceiver unit which operates within the frequency band of 790MHz to 862MHz and is designed complying with the technical specification of the LTE TDD base station. The frequency band used by the first transceiver unit is called the first frequency band, and the frequency band used by the second transceiver unit is called the second frequency band. When the wireless communication device is the one shown in Fig. 4, the wireless environment detecting unit 105 in the wireless communication device has the capability of measuring the idle frequency band and measuring power of the adjacent frequency band, within the range of 470MHz to 790MHz.

The transceiver unit 401 in a wireless terminal with the function of the wireless communication device has the transmission-reception channels working within two different frequency bands; one is the first transceiver unit which operates within the idle frequency band of 470MHz to 790MHz and is designed complying with the technical specification of the LTE TDD base station, the other is the second transceiver unit which operates within the frequency band of 790MHz to 862MHz and is designed complying with the technical specification of the LTE TDD base station. The adjacent-band auxiliary signal transmission unit 403 in the wireless terminal with the function of the wireless communication device has the capability of performing auxiliary signal transmission to the adjacent channel of its transmission channel in a radio frequency direct amplifying mode.

In the system for performing auxiliary signal transmission for the adjacent channel, the network side has the adjacent-band auxiliary signal transmission management unit 405 shown in Fig. 5(a), wherein the adjacent-band auxiliary signal transmission management unit 405 is configured in the BBU of the network or the SGW, and performs auxiliary signal transmission management to each wireless communication device. After determining the frequency band requiring auxiliary signal transmission of each wireless communication device and the enforceable auxiliary signal transmission mode, the network side manages distribution of the data stream for auxiliary signal reconstruction to the needed wireless communication device, for the adjacent channel, i.e. a terrestrial television broadcasting channel, which is required to adopt the local reconstruction mode to perform auxiliary signal transmission.

In Fig. 6(b), the wireless communication device in accordance with the embodiment of the present invention is configured at location A. The adjacent-band auxiliary signal transmission management unit 405 finds that there are two idle frequency bands BW0 of the terrestrial television broadcasting channel between the television broadcasting channels BW1 and BW2, according to the prior knowledge or the measurement result in the range from 470MHz to 790MHz of the wireless environment detecting unit 105 in the wireless communication device (with the structure shown in Fig. 4), wherein the bandwidth of BW0 is from 8MHz to 16MHz. If not performing auxiliary signal transmission to the existing signal on the television broadcasting channels BW1 and BW2, for preventing the transmission channel within the frequency band BW0 of the wireless communication device from causing interference to the television broadcasting channels BW1 and BW2, guard bands GB1 and GB2 are set as 5MHz, respectively; thus, the channel bandwidth of the transmission channel BW0 of the LTE TDD can only be set as 5MHz.

For efficiently using the idle bandwidth, the embodiment of the present invention adopts the mode shown in Fig. 2(b) to perform auxiliary signal transmission to the adjacent channels BW1 and BW2 of the BW0. When determining the auxiliary signal generating modes for the BW1 and BW2, the adjacent-band auxiliary signal transmission management unit 405 finds according to the prior knowledge that the television broadcasting channel within the BW1 is a digital terrestrial television broadcasting channel, and the television broadcasting channel within the BW2 is an analogue terrestrial television broadcasting channel, so the adjacent-band auxiliary signal transmission management unit 405 determines to generate the auxiliary signal for the BW1 by adopting a local reconstruction mode and generate the auxiliary signal for the BW2 by adopting a radio frequency direct amplifying mode. Preferably, the adjacent-band auxiliary signal transmission management unit 405 controls the transmission network to transmit the data stream needed by locally reconstructing the signal on the channel BW1 to the wireless communication device (with the structure shown in Fig. 4) at the location A shown in Fig. 6(b).

Through the processes of the embodiment of the present invention, under the situation of performing auxiliary signal transmission to the existing signals on the television broadcasting channels BW1 and BW2, the guard bands GB1 and GB2 are only required to be set as 0.5MHz, respectively, and the channel bandwidth of the transmission channel BW0 (complying with the technical specification of LTE TDD base station) configured within the BW0 of the wireless communication device (with the structure shown in Fig. 4) is set as 15MHz.

Compared with the available bandwidth of 5MHz of the transmission channel of the LTE TDD under the situation of not adopting auxiliary signal transmission, the available bandwidth of the transmission channel of the LTE TDD is increased by 10MHz by adopting auxiliary signal transmission in accordance with the embodiments of the present invention. It can be seen that increase of the usage efficiency of the frequency spectrum is significant after adopting the method and system in accordance with the embodiments of the present invention.

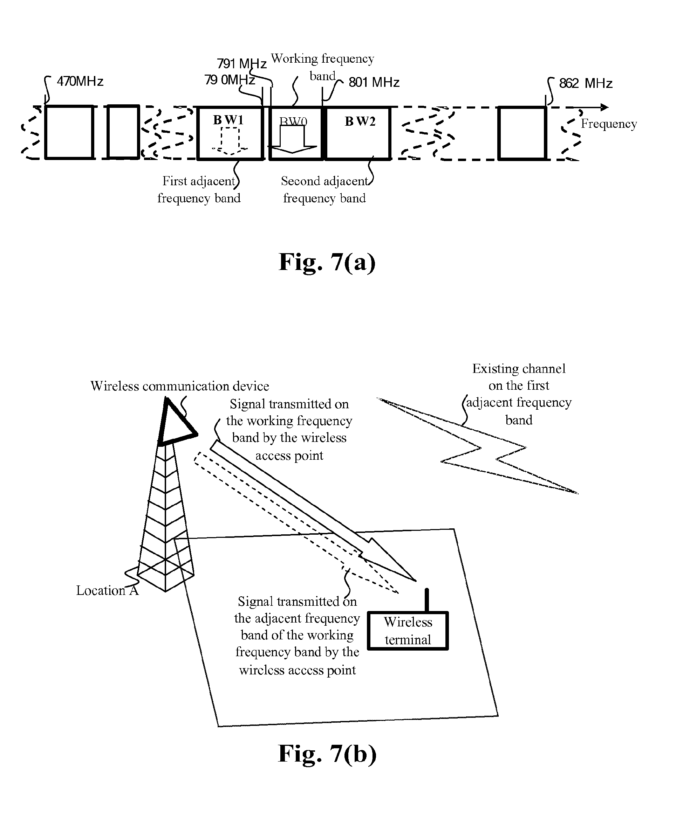

A second embodiment is a solution of implementing auxiliary signal transmission to an adjacent channel when the embodiment of the present invention is applied to a licensed frequency band which is adjacent to the television broadcasting frequency band. Fig. 7(a) shows a schematic diagram that a downlink channel in a working frequency band of a wireless communication device is adjacent to a television broadcasting channel. Fig. 7(b) shows a schematic diagram that a wireless communication device transmits an auxiliary signal to a terrestrial television broadcasting channel adjacent to a working channel of the wireless communication device.

In the second embodiment, the transceiver unit 101 in the wireless communication device (with the structure shown in Fig. 3) is an LTE/LTE-A base station having the capability of performing auxiliary signal transmission to the adjacent frequency band. The transceiver unit 101 comprises the transmission channel and reception channel that are designed complying with the technical specification of the LTE FDD base station. The frequency bands owned by the operator deploying the system shown in Fig. 7(b) are: downlink 10MHz, in the range from 791MHz to 801MHz; uplink 10MHz, in the range from 832MHz to 842MHz, as shown in Fig. 7(a).

Because the bandwidth of the licensed frequency band of the downlink 10MHz is from 791MHz to 801MHz, the guard band GB1 between the licensed frequency band and the television broadcasting channel which is configured within the frequency band of 782MHz to 790MHz, and bandwidth of which is 8MHz, is 1MHz.

For the guard band GB1 with width of 1MHz, the location A where the LTE/LTE-A FDD base station is deployed is closer to the location where the terrestrial television broadcasting transmitter operating within the frequency band of 782MHz to 790MHz is deployed, thus, when the intensities of signals on two adjacent channels are equivalent, the guard band GB1 with the width of 1MHz can effectively suppress the adjacent channel interference between the LTE/LTE-A FDD base station deployed at the location A and the terrestrial television broadcasting transmitter at another location. When the LTE/LTE-A FDD base station is in the effective coverage area of the terrestrial television broadcasting transmitter at another location, but is far away from the terrestrial television broadcasting transmitter, the out-of-band leakage generated during transmission of the LTE/LTE-A FDD base station within 791MHz to 801MHz causes interference to reception of the terrestrial television broadcasting transmitter within 782MHz to 790MHz. For avoiding the out-of-band interference, the following steps can be performed.

A guard band is added between the downlink channel of the LTE/LTE-A FDD base station and the broadcasting channel configured within the frequency band of 782MHz to 790MHz, namely, the sub-band of 791MHz to 796MHz with the width of 5MHz, which is close to the frequency band of 782MHz to 790MHz, in the frequency band of 791MHz to 801MHz is regarded as the guard band. Obviously, in this way, the usage rate of the frequency band of 791MHz to 801MHz is only 50%.

Alternatively, the method in accordance with the embodiments of the present invention can be adopted to perform auxiliary signal transmission to the broadcasting channel which is adjacent to the downlink channel of the LTE/LTE-A FDD base station configured within the frequency band of 791MHz to 801MHz. The procedure of performing auxiliary signal transmission to the broadcasting channel which is adjacent to the downlink channel of the LTE/LTE-A FDD base station configured within the frequency band of 791MHz to 801MHz specifically comprises processes as follows.

First, the adjacent-band auxiliary signal transmission management unit 405 determines to perform auxiliary signal transmission to the broadcasting channel which is adjacent to the downlink channel of the LTE/LTE-A FDD base station configured within the frequency band of 791MHz to 801MHz, and determines to adopt the local reconstruction mode to perform the auxiliary signal transmission; then, the adjacent-band auxiliary signal transmission management unit 405 configures the transmission network, and transmits the data stream (TS stream) transmitted by the terrestrial television broadcasting transmitter within the frequency band of 782MHz to 790MHz, to the wireless communication device (with the structure shown in Fig. 3) at the location A, so that the adjacent-band data processing module and the adjacent-band transmission channel module in the wireless communication device implement reconstruction and transmission of the auxiliary signal.

In the application scenario presented by the second embodiment, the interference to the television broadcasting channel within the frequency band of 782MHz to 790MHz from the downlink channel of the LTE/LTE-A FDD base station configured within the frequency band of 791MHz to 801MHz is avoided by adopting the method in accordance with the embodiments of the present invention. Besides, the usage efficiency of the frequency spectrum within the frequency band of 791MHz to 801MHz is increased, and the coverage performance of the television broadcasting channel within the frequency band of 782MHz to 790MHz is improved.

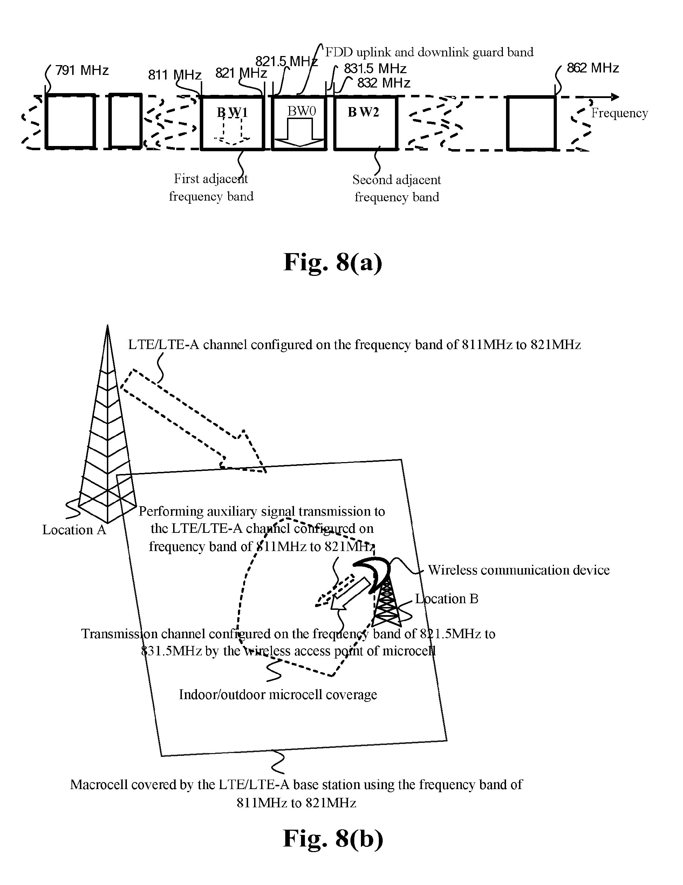

A third embodiment is a solution of implementing auxiliary signal transmission to an adjacent channel when the embodiment of the present invention is applied to the wireless communication system using FDD guard. Fig. 8(a) shows a schematic diagram that a wireless communication device in a microcell configures a bidirectional channel or a unidirectional channel within uplink and downlink guard bands of a Frequency Division Duplex (FDD) system. Fig. 8(b) shows a schematic diagram that a wireless communication device in a microcell performs auxiliary signal transmission for a downlink channel of an FDD system.

The third embodiment is an embodiment that the wireless communication device in the microcell performs auxiliary signal transmission to an FDD downlink channel, wherein the wireless communication device in the microcell is the one that configures a transmission channel within the guard bands of the uplink and downlink frequency bands of the FDD system. As shown in Fig. 8(a), the frequency band of 821MHz to 832MHz is the frequency interval between the downlink frequency band and the uplink frequency band of the FDD system; the third embodiment is for describing that, by performing the auxiliary signal transmission to the downlink channel of the access point of a macrocell through the access point of a microcell, the available bandwidth of the downlink channel of the access point of the microcell is effectively expanded. In the third embodiment, the composition of the access point of a microcell node is shown in Fig. 3 or Fig. 4, and the system deployment mode of the microcell node and the macrocell node is shown in Fig. 8(b).

In the third embodiment, the radio frequency channel of the transceiver unit 101 in the wireless communication device is a transmission-reception channel which is designed complying with the technical specification of the LTE/LTE-A TDD base station, or the radio frequency channel of the transceiver unit 101 in the wireless communication device is a downlink transmission channel which is designed complying with the technical specification of the LTE/LTE-A FDD base station.

The location B where the wireless communication device is deployed is effectively covered by the LTE/LTE-A FDD macrocell base station which is deployed at the location A; as shown in Fig. 8(a), the LTE/LTE-A FDD macrocell base station which is deployed at the location A configures the downlink channel with the bandwidth of 10MHz within the frequency band of 811MHz to 821MHz.

There is the problem that the out-of-band leakage of the transmission channel of the transceiver unit 101 causes interference to the downlink channel within the adjacent frequency band of 811MHz to 821MHz used by the macro base station, whether the wireless communication device deploys a unidirectional downlink channel or deploys unidirectional uplink and downlink channels within the frequency band of 821MHz to 832MHz.

For avoiding the out-of-band interference, the following measures can be adopted.

A guard band is added between the downlink channel of the LTE/LTE-A FDD base station and the downlink channel of the access point of the microcell which is configured within the frequency band of 821MHz to 832MHz (with the bandwidth of 11MHz), for example, the sub-band with the width of 5MHz, which is close to the frequency band of 811MHz to 821MHz, in the frequency band of 821MHz to 832MHz is regarded as the guard band. Obviously, in this way, the usage rate of the frequency band of 821MHz to 832MHz (with the bandwidth of 11MHz) is very low. If the guard band of 5MHz for 832MHz to 842MHz is removed from the frequency band of 821MHz to 832MHz (with the bandwidth of 11MHz), then only 1MHz bandwidth is left for use of the wireless communication device in the microcell.

Alternatively, the method and system in accordance with the embodiments of the present invention can be adopted to perform auxiliary signal transmission to the downlink channel of the LTE/LTE-A FDD base station which is configured within the frequency band of 811MHz to 821MHz. The procedure of performing auxiliary signal transmission to the downlink channel of the LTE/LTE-A FDD base station which is configured within the frequency band of 811MHz to 821MHz specifically comprises processes as follows.

The adjacent-band auxiliary signal transmission management unit 405 determines that the LTE TDD/FDD wireless communication device at the location B transmits the auxiliary signal to the downlink channel of the LTE/LTE-A FDD base station at the location A, according to a potential adjacent-channel interference relation between the transmission channel of the LTE TDD/FDD wireless communication device at the location B in Fig. 8(b) and the downlink channel of the LTE/LTE-A FDD base station working within the frequency band of 811MHz to 821MHz at the location A. In the embodiment, supposing that the LTE TDD/FDD wireless communication device at the location B has the transmission channel for receiving the data stream needed for locally reconstructing the auxiliary signal from the network side, the adjacent-band auxiliary signal transmission management unit 405 transmits the data stream needed for locally reconstructing the auxiliary signal to the wireless communication device in the microcell at the location B through the transmission network.

The mode adopted by the wireless communication device in the microcell to perform auxiliary signal transmission to the downlink channel of the LTE/LTE-A FDD base station is performing auxiliary signal transmission to signals on the whole adjacent channel, or performing auxiliary signal transmission to signals within part of the frequency band on the adjacent channel.

In the third embodiment, for the wireless communication device at the location B is in the area, close to the cell edge, of the coverage area of the LTE/LTE-A FDD macrocell base station, and the LTE/LTE-A FDD base station at the location A uses, at the location B, only part of the frequency band working within the range of 811MHz to 821MHz as the edge coverage, the wireless communication device at the location B only performs auxiliary signal transmission to the signals within part of the frequency band of the downlink channel of the LTE/LTE-A FDD base station, wherein the part of the frequency band serves the area where the location B is.

In the application scenario presented by the third embodiment, the interference to the downlink channel of the LTE/LTE-A FDD base station configured within the frequency band of 811MHz to 821MHz from the wireless communication device configured within the frequency band of 821MHz to 832MHz (with the bandwidth of 11MHz) is avoided by adopting the method of the embodiments of the present invention. Besides, the width of frequency band available for the wireless communication device within the frequency band of 821MHz to 832MHz (with the bandwidth of 11MHz) is improved, and the coverage quality of the downlink channel of the LTE/LTE-A FDD base station configured within the frequency band of 811MHz to 821MHz is improved, thereby increasing the downlink data transfer rate of the cell edge of the LTE/LTE-A FDD base station.

The above is only the preferred embodiment of the present invention and not intended to limit the scope of the claims of the present invention; any modifications, equivalent replacements, improvements and the like within the principle of the present invention shall fall within the scope of the claims of the present invention.

## Claims

1. A method for performing auxiliary signal transmission for an adjacent channel, **characterized by** comprising:
selecting, from adjacent channels of a transmission channel of a wireless communication device, an adjacent channel requiring and allowing auxiliary signal transmission of an existing signal on the adjacent channel;
determining an auxiliary signal generating mode for the existing signal on the selected adjacent channel; and
generating an auxiliary signal locally at a place where the wireless communication device is located according to the determined auxiliary signal generating mode, and transmitting the auxiliary signal on a corresponding adjacent channel.

2. The method according to claim 1, **characterized in that** selecting, from the adjacent channels of the transmission channel of the wireless communication device, the adjacent channel requiring and allowing the auxiliary signal transmission of the existing signal on the adjacent channel comprises:
according to a frequency location and bandwidth covered by the transmission channel of the wireless communication device, selecting, within left and right adjacent frequency bands of the transmission channel of the wireless communication device and in a predetermined frequency range, an adjacent channel meeting all following conditions as an adjacent channel requiring the auxiliary signal transmission of the existing signal on the adjacent channel:
an existing signal on the adjacent channel is transmitted by a transmitter out of a geographical location where the wireless communication device is located,
on the geographical location where the wireless communication device is located, power/intensity of the existing signal on the adjacent channel exceeds a predetermined first power threshold that can be received normally, and
on the geographical location where the wireless communication device is located, the power/intensity of the existing signal on the adjacent channel is lower than a second power threshold that is free from interference from out-of-band leakage power of the transmission channel of the wireless communication device;
obtaining the adjacent channel requiring and allowing the auxiliary signal transmission of the existing signal on the adjacent channel, by removing an adjacent channel technically and managerially not allowing the auxiliary signal transmission of an existing signal on the adjacent channel from the selected adjacent channel requiring the auxiliary signal transmission of the existing signal on the adjacent channel.

3. The method according to claim 1, **characterized in that** after the adjacent channel requiring and allowing the auxiliary signal transmission of the existing signal on the adjacent channel is selected, the method further comprises:
according to a maximum value or a typical value of auxiliary signal transmission power applied to the selected adjacent channel, determining out-of-band leakage power of the auxiliary signal of the selected adjacent channel to an adjacent channel of the selected adjacent channel;
when the out-of-band leakage power of the auxiliary signal of the selected adjacent channel generated in the adjacent channel of the selected adjacent channel exceeds a predetermined threshold, performing auxiliary signal transmission for the adjacent channel of the selected adjacent channel.

4. The method according to claim 1, **characterized in that** the auxiliary signal generating mode is:
generating the auxiliary signal for the selected adjacent channel through a local signal reconstruction mode; or
generating the auxiliary signal for the selected adjacent channel through a local radio frequency direct amplifying mode.

5. The method according to claim 4, **characterized in that** determining that the auxiliary signal generating mode is the local signal reconstruction mode comprises that:
a network side is able to obtain a data stream needed for generating the auxiliary signal and has a channel for transmitting the data stream needed for generating a local auxiliary signal to the wireless communication device, and the wireless communication device has a capability of generating a local auxiliary signal on the selected adjacent channel.

6. The method according to claim 4, **characterized in that** determining that the auxiliary signal generating mode is a radio frequency direct amplifying mode comprises that: the wireless communication device has a capability of implementing the radio frequency direct amplifying mode on the selected adjacent channel.

7. The method according to claim 1, **characterized in that** transmitting the auxiliary signal comprises: keeping time synchronization, frequency synchronization, symbol synchronization and geographical area synchronization between an auxiliary signal on the selected adjacent channel and the existing signal on the selected adjacent channel, on a geographical location/geographical space where the wireless communication device is located.

8. The method according to claim 7, **characterized in that**
the time synchronization is that a radio frame of the auxiliary signal transmitted on the selected adjacent channel is kept synchronous in an initial time with a radio frame of the existing signal on the selected adjacent channel at the geographical location where the wireless communication device is located;
the frequency synchronization is that a carrier frequency of the auxiliary signal transmitted on the selected adjacent channel is consistent with a carrier frequency of the existing signal on the selected adjacent channel;
the symbol synchronization is that an occupied time and frequency location and a modulation and coding scheme of an information symbol, which is transmitted on the selected adjacent channel as the auxiliary signal, are consistent with an occupied time and frequency location and a modulation and coding scheme of the information symbol in the existing signal on the selected adjacent channel;
a covered geographical/spatial area synchronization is that a geographical or spatial area covered by the auxiliary signal transmitted by the wireless communication device on the selected adjacent channel is consistent with or larger than a geographical or spatial area covered by a signal transmitted by the wireless communication device on the transmission channel of the wireless communication device.

9. The method according to claim 8, **characterized in that** the auxiliary signal generating mode is a local radio frequency direct amplifying mode, and the method further comprises:
the wireless communication device performing radio frequency direct amplification on the selected adjacent channel for the existing signal according to predetermined transmission power; an adjacent-band transmission channel in the wireless communication device sharing a transmission antenna with a transmission channel of a transceiver.

10. The method according to claim 5, **characterized in that** the auxiliary signal generating mode is the local signal reconstruction mode, and the method further comprises: performing local reconstruction for the existing signal on the selected adjacent channel.

11. The method according to claim 10, **characterized in that** performing the local reconstruction for the existing signal on the selected adjacent channel comprises:
transmitting a base band signal, or an intermediate-frequency signal, or a data stream of the existing signal which is on the selected adjacent channel to the wireless communication device through a backhaul;
the wireless communication device buffering the base band signal, or the intermediate-frequency signal, or the data stream of the existing signal which is on the selected adjacent channel, and obtaining a pre-transmission signal that has a same time domain structure and frequency domain structure on a base band as the existing signal on the selected adjacent channel, after performing a corresponding process aiming at a specific data form of the data stream, or the base band signal, or the intermediate-frequency signal;
synchronously transmitting the auxiliary signal of the existing signal and the existing signal on the selected adjacent channel.

12. The method according to claim 11, **characterized in that** synchronously transmitting the auxiliary signal of the existing signal comprises: aligning frame headers of a radio frame of the auxiliary signal transmitted by the wireless communication device and a radio frame where the existing signal is, and transmitting the auxiliary signal of the existing signal.

13. The method according to claim 12, **characterized in that** when the wireless communication device transmits the auxiliary signal,
the auxiliary signal is transmitted using a same antenna as that used by the transmission channel configured on a working frequency band by the wireless communication device; or,
the auxiliary signal is transmitted using the same antenna as that used by the transmission channel configured on the working frequency band by the wireless communication device, but different pre-coding processes are applied to the transmission signal on the working frequency band and the auxiliary signal; or,
the auxiliary signal is transmitted using an antenna different from that used by the transmission channel configured on the working frequency band by the wireless communication device, and an omnidirectional antenna in the antenna used for transmitting the auxiliary signal covers an area that is able to be covered by a directional antenna.

14. The method according to any one of claims 1 to 13, **characterized by** further comprising:
sending a beacon signal within a frequency band occupied by the selected adjacent channel;
wherein the beacon signal comprises identification information of the wireless communication device.

15. A wireless communication device, **characterized by** comprising a transceiver unit, an adjacent-band auxiliary signal transmission unit, an adjacent-band auxiliary signal transmission control unit, a first antenna unit and an interface unit, wherein
the transceiver unit comprises at least one transmission channel, and is configured to perform transmission of a unidirectional downlink signal within a working frequency band, and/or perform bidirectional communication within the working frequency band;
the adjacent-band auxiliary signal transmission unit is configured to transmit an auxiliary signal on an adjacent channel selected from adjacent channels of the transceiver unit;
the adjacent-band auxiliary signal transmission control unit is configured to control a transmission channel parameter and a transmission mode of the adjacent-band auxiliary signal transmission unit;
the interface unit is a module configured to implement digital communication with other communication devices;
the first antenna unit is configured to transmit and receive a signal passing the wireless communication device.

16. The wireless communication device according to claim 15, **characterized in that** the adjacent-band auxiliary signal transmission unit comprises an adjacent-band transmission channel module and an adjacent-band reception channel module, wherein
the adjacent-band transmission channel module is configured to transmit a signal of an adjacent frequency band by adopting an independent physical channel, or by sharing the transmission channel with the transceiver unit;
the adjacent-band reception channel module is configured to receive a signal of the adjacent frequency band by adopting an independent physical channel, or by sharing the reception channel with a unit for detecting wireless environment.

17. The wireless communication device according to claim 15, **characterized in that** the adjacent-band auxiliary signal transmission unit comprises an adjacent-band transmission channel module and an adjacent-band data processing module, wherein
the adjacent-band transmission channel module is configured to transmit a signal of an adjacent frequency band by adopting an independent physical channel, or by sharing the transmission channel with the transceiver unit;
the adjacent-band data processing module is configured to process a data stream which is from a network side and used for performing auxiliary signal transmission to the adjacent channel of the transmission channel of the transceiver unit 101.

18. The wireless communication device according to claim 16 or 17, **characterized in that** the adjacent-band auxiliary signal transmission unit is a module independently set in the wireless communication device, or is set in a same functional module with the transceiver unit.

19. The wireless communication device according to claim 15, **characterized in that** the adjacent-band auxiliary signal transmission control unit is further configured to monitor a transmitting-receiving isolation of a repeater.

20. The wireless communication device according to claim 15, **characterized by** further comprising a channel parameter control unit, which is configured to control a channel parameter of the transceiver unit.

21. The wireless communication device according to claim 15 or 20, **characterized by** further comprising a wireless environment detecting unit and a second antenna unit, wherein
the wireless environment detecting unit comprises one or more reception channels and signal processing units, and is configured to detect wireless environment of a geographical location where the wireless communication device is located;
the second antenna unit is coupled with a sensor of the wireless environment detecting unit, wherein the sensor is configured to perform wireless environment measurement to a location where the wireless environment detecting unit is.

22. The wireless communication device according to claim 21, **characterized in that** the wireless environment detecting unit is a module independently set in the wireless communication device, or is set in a same functional module with the transceiver unit.

23. A system for performing auxiliary signal transmission for an adjacent channel, **characterized by** comprising a network side, one or more than one wireless access point and a wireless terminal, wherein
the network side comprises an adjacent-band auxiliary signal transmission management unit, which is configured to perform auxiliary signal transmission management to an adjacent frequency band of a working frequency band of the wireless access point requiring auxiliary signal transmission;
the wireless access point is configured to determine and perform the auxiliary signal transmission according to management contents sent from the network side;
the wireless terminal is configured to receive a signal from the wireless access point.

24. The system according to claim 23, **characterized in that**
the wireless access point at a first geographical location is configured to transmit a first signal to a first geographical area through a transmission channel which is configured on a first frequency band, and transmit an auxiliary signal of an existing signal to a second geographical area on an adjacent channel of the transmission channel, wherein the existing signal is on a channel which is configured on an adjacent frequency band of the first frequency band and adjacent to the transmission channel on the first frequency band;
a radio frame of the auxiliary signal transmitted by the wireless access point at the first geographical location is kept synchronous with that of the existing signal on the adjacent channel, at the first geographical location.

25. The system according to claim 24, **characterized in that**
the wireless access point is a bidirectional wireless communication device, a downlink channel is deployed on the first frequency band, and an uplink channel is deployed on the first frequency band or other frequency bands;
the existing signal on the channel which is configured on the adjacent frequency band of the first frequency band and adjacent to the transmission channel on the first frequency band is transmitted by a transmitter at other geographical location out of the first geographical location;
the first geographical location is in an effective coverage area of the existing signal on the adjacent channel of the transmission channel;
the first geographical area and the second geographical area are the same; or the first geographical area is included in the second geographical area.
